## Europäisches Patentamt
## European Patent Office
## Office européen des brevets

(19)

(11) Veröffentlichungsnummer: **0 471 416 B1**

(12) # EUROPÄISCHE PATENTSCHRIFT

(45) Veröffentlichungstag der Patentschrift: **08.02.95**

(51) Int. Cl.⁶: **C08F 220/22**, C08F 220/24, D06M 15/277

(21) Anmeldenummer: **91202089.8**

(22) Anmeldetag: **15.08.91**

(54) **Wässrige Dispersionen von fluorhaltigen Polymeren.**

(30) Priorität: **17.08.90 DE 4026097**

(43) Veröffentlichungstag der Anmeldung:
**19.02.92 Patentblatt 92/08**

(45) Bekanntmachung des Hinweises auf die
Patenterteilung:
**08.02.95 Patentblatt 95/06**

(84) Benannte Vertragsstaaten:
**BE DE FR GB**

(56) Entgegenhaltungen:
**EP-A- 0 294 648**
**US-A- 4 147 851**

(73) Patentinhaber: **HOECHST AKTIENGESELL-SCHAFT**

**D-65926 Frankfurt (DE)**

(72) Erfinder: **Kallfass, Dietmar, Dr.**
**Schwedenstrasse 5**
**W-6237 Liederbach (DE)**
Erfinder: **Lämmermann, Dieter, Dr.**
**Breckenheimer Strasse 32**
**W-6238 Hofheim am Taunus (DE)**
Erfinder: **Mees, Bernhard, Dr.**
**Gräfliche Strasse 31**
**W-6239 Eppstein am Taunus (DE)**
Erfinder: **Prossel, Günter, Dr.**
**Nussbaumstrasse 8**
**W-8269 Burgkirchen (DE)**

**Beschreibung**

Die Erfindung betrifft wäßrige lösungsmittelfreie, fluorhaltige Dispersionen, ein Verfahren zu deren Herstellung sowie deren Verwendung zur fluorchemischen Behandlung von Textilien wie Teppichen, Polsterungen u.a., um diesen Wasser- und Ölfestigkeit zu verleihen. Polymere mit Perfluoralkylgruppen sind geeignete Substanzen, um Textilien oder Teppiche zugleich hydrophob oder oleophob auszurüsten, wie es zum Beispiel in den Patentschriften EP 345 552, EP 332 141, EP 73364 und US 3 356 628 beschrieben ist. Diese Polymere werden aus anwendungstechnischen Gründen bevorzugt in Form von wäßrigen und möglichst lösungsmittelfreien Dispersionen eingesetzt.

Die Herstellung wäßriger, lösungsmittelfreier Dispersionen nach bekannten Verfahrensweisen der Emulsionspolymerisation ist jedoch schwierig, da die Perfluoralkylmonomere extrem wasserunlöslich sind und in Wasser keine stabilen Emulsionen erhalten werden können. Der Zusatz von organischen Lösungsmitteln wie z.B. Aceton zur Erhöhung der Monomerlöslichkeit, wie u.a im US-Patent 3 403 122 beschrieben, ergibt Dispersionen, die meist grobkörnig und wenig lagerstabil sind. Aus diesen Gründen wird zum Teil so verfahren, daß die Perfluoralkylmonomere in Lösung polymerisiert werden und anschließend aus dem erhaltenen Polymeren eine Dispersion hergestellt wird. Dies bedingt notwendigerweise eine weitere Verfahrensstufe im Vergleich zur Emulsionspolymerisation und ist wegen des Lösungsmittelanteils im Produkt für die Anwendung nur bedingt geeignet. Die nachträgliche Dispersion eines ausgefallenen Fluorpolymeren stellt sich in der Praxis überdies als aufwendig heraus.

Es wurde nun gefunden, daß bei Verwendung von Aminoxid-Emulgatoren stabile wäßrige Dispersionen erhalten werden, deren anwendungstechnische Eigenschaften andere Systeme deutlich übertreffen. Sie zeichnen sich insbesondere dadurch aus, daß die erhaltenen Dispersionen ohne Zusatz von organischen Lösungsmitteln stabile Systeme darstellen und aufgrund des Aminoxid-Emulgators einen nahezu neutralen pH-Wert besitzen.

Gegenstand der Erfindung sind daher wäßrige, lösungsmittelfreie Dispersionen von Polymerisaten aus Monomeren der Formeln (1) und (2)

$$H_2C = CR\text{-}COOC_2H_4\text{-}C_nF_{2n+1} \qquad (1)$$

wobei R Fluor, Chlor, Wasserstoff oder Methyl und n Zahlen von 5 bis 18, vorzugsweise 8 bis 12, bedeuten,

$$H_2C = CRX \qquad (2)$$

wobei R Wasserstoff oder Methyl und X eine Gruppe der Formeln $C_6H_5$, $CO_2CH_2C_6H_5$, $CO_2C_2H_4C_6H_5$, CN, $CO_2CH_2C_6H_4Cl$, $CO_2C_6H_4\text{-}C_1\text{-}C_4\text{-alkyl}$, $CO_2C_nH_{2n+1}$ mit n = 10 bis 22, vorzugsweise 14 bis 18, CONHY, wobei Y Wasserstoff, $C_1\text{-}C_4$-Alkyl, $C_1\text{-}C_4$-Hydroxyalkyl, $C_1\text{-}C_4$-Alkoxy-$C_1\text{-}C_4$-alkyl oder $CO_2\text{-}C_1\text{-}C_{20}$-alkyl, vorzugsweise $CO_2\text{-}C_2\text{-}C_8$-alkyl bedeuten, und einem oder mehreren Emulgatoren der Formel (3)

$$C_nF_{2n+1}\text{-}CR^1R^2\text{-}CHR^3\text{-}(CH_2)_x\text{-}NR_2O \qquad (3)$$

wobei R $C_1\text{-}C_4$-Alkyl oder Hydroxyethyl, $R^1$ und $R^2$ gleich oder verschieden sind und $C_1\text{-}C_4$-Alkyl, Wasserstoff oder Fluor, $R^3$ Wasserstoff oder $C_1\text{-}C_4$-Alkyl, x = 1, 2 oder 3 und n = 3 bis 9, vorzugsweise 5 bis 7, sein können, und/oder der Formel (4)

$$R^1R^2R^3NO \qquad (4)$$

wobei $R^1$ und $R^2$ jeweils gleich oder verschieden sein können und $C_1\text{-}C_4$-Alkyl oder Wasserstoff und $R^3$ $C_8\text{-}C_{18}$-Alkyl, vorzugsweise $C_{10}\text{-}C_{14}$-Alkyl, bedeuten.

Der Anteil des fluorfreien Comonomeren der Formel (2)in den Polymerisaten kann bis zu 50 Gewichtsprozent betragen.

Als Emulgatoren verwendet man vorzugsweise Verbindungen der Formel (3), wobei $R^1$ und $R^3$ Wasserstoff, $R^2$ Fluor, R $C_1\text{-}C_4$-Alkyl oder $CH_2CH_2OH$, n Zahlen von 3 bis 9 und x Zahlen von 1 bis 3 bedeuten, die in Mischung mit bis zu 30 Gewichtsprozent, bezogen auf die Mischung, einer Verbindung der Formel (3), wobei $R^1$, $R^2$ und $R^3$ Wasserstoff, R $C_1\text{-}C_4$-Alkyl oder $CH_2CH_2OH$, n Zahlen von 3 bis 9 und x Zahlen von 1 bis 3 bedeuten, vorliegen können. Als Emulgatoren der Formel (3) kommen insbesondere solche Verbindungen in Frage, in denen $R^1$ und $R^3$ Wasserstoff, $R^2$ Fluor, R Methyl oder Ethyl, n Zahlen von 5 bis 7 und x die Zahlen 1 oder 2 bedeuten, die in Mischung mit bis zu 30 Gewichtsprozent, bezogen auf die Mischung, einer Verbindung der Formel (3), wobei $R^1$, $R^2$ und $R^3$ Wasserstoff, R Methyl oder Ethyl, n Zahlen von 5 bis 7 und x die Zahlen 1 oder 2 bedeuten, vorliegen können.

Die Emulgatoren der Formeln (3) und (4) können im Gemisch mit Co-Emulgatoren der Formel (5)

$$C_nH_{2n+1}-C_6H_4-O-(C_2H_4O)_mH \qquad (5)$$

wobei n Zahlen von 4 bis 16, vorzugsweise 8 bis 10, und m Zahlen von 10 bis 30, vorzugsweise 18 bis 26, bedeuten, und/oder mit Co-Emulgatoren der Formel (6)

$$C_nH_{2n+1}-O-(C_2H_4O)_mH \qquad (6)$$

wobei n Zahlen von 10 bis 20, vorzugsweise 13 bis 18, und m Zahlen von 4 bis 12, vorzugsweise 7 bis 9, bedeuten, eingesetzt werden.

Um den anwendungstechnischen Zweck zu erreichen, können die Emulgatoren der Formeln (3) und (4) jeweils für sich allein oder in Mischung miteinander in jedem beliebigen Mischungsverhältnis miteinander verwendet werden. Für die Stabilität der Dispersionen ist es vorteilhaft, wenn bis zu 50 Gewichtsprozent der Emulgatoren der Formel (3) und/oder (4) von einem oder mehreren Co-Emulgatoren der Formeln (5) oder (6) ersetzt werden.

Die Gesamtmenge der Emulgatoren bezogen auf die Gesamtmenge der Monomeren soll 5 - 30 Gewichtsprozent, vorzugsweise 10 - 15 Gewichtsprozent betragen.

Zur Herstellung der erfindungsgemäßen wäßrigen Dispersionen wird vorzugsweise so vorgegangen, daß die Monomerenmischung mit den Emulgatoren und eventuell Co-Emulgatoren versetzt und so viel Wasser zugegeben wird, daß sich für die Dispersionen aus den Fluorgehalten der Monomeren und der zugesetzten Emulgatoren zusammen ein Fluorgehalt von 10-30 Gewichtsprozent, bezogen auf die gesamte Dispersion, ergibt. Die Mischung wird im allgemeinen 30 Minuten bei 50°C unter Stickstoffatmosphäre gerührt und anschließend ein für die Emulsionspolymerisation üblicher wasserlöslicher Radikalstarter, wie zum Beispiel Azodiisobutyramidin-dihydrochlorid, als Katalysator zugesetzt. Nach mehrstündigem Erhitzen beispielsweise auf 50 bis 60°C (s. Tab. 1) wird die Dispersion ohne weitere Heizung gerührt, bis sie Raumtemperatur angenommen hat.

Die erfindungsgemäßen wäßrigen Dispersionen sind zur Ausrüstung von Textilien aus natürlichen oder synthetischen Fasern, insbesondere aus Polyamid, Polyester, Polyacrylnitril und Wolle oder Gemischen dieser Faserarten geeignet. Das Textilmaterial kann in beliebiger Form vorliegen, so z.B. als Faser, Garn, Flocke, Gestrick, Gewirk oder Vlies, insbesondere jedoch als Gewebe. Die erfindungsgemäßen wäßrigen Dispersionen können in der Form auf das Textilmaterial aufgebracht werden, in der sie bei der Herstellung anfallen. Üblicherweise wird man sie jedoch zur Anwendung mit Wasser auf einen Feststoffgehalt von 0.1-10 Gew.-%, vorzugsweise 1 - 5 Gew.-% verdünnen. Die Applikation auf das zu behandelnde Textilgut kann durch Sprühen, Pflatschen, Foulardieren etc. erfolgen. Die Auftragsmenge wird so gewählt, daß auf dem Textilmaterial 0.01 - 1 Gew.-% Fluor, vorzugsweise 0.03 - 0.2 Gew.-% Fluor, vorhanden sind. Nach dem Aufbringen auf das Textilgut erfolgt eine Trocknung bei Temperaturen bis ca. 120°C und anschließend wird bei Temperaturen von ca. 130 - 190°C, vorzugsweise 140 - 180°C, eine Wärmebehandlung durchgeführt, die üblicherweise etwa 20 Sekunden bis 5 Minuten andauert. Während die Aminoxide der Formeln (3) und (4) bei der Herstellung der erfindungsgemäßen wäßrigen Dispersionen stabil bleiben, zersetzen sie sich bei den bei der Fixierung der Dispersionen auf der Textilfaser notwendigen Temperaturen von oberhalb 120°C jedoch nahezu quantitativ (Differential-Thermo-Gravimetrie), was sich für die Öl- und Wasserabweisung besonders günstig auswirkt. Da die Zersetzungsprodukte der erfindungsgemäß eingesetzten Emulgatoren zum Großteil gasförmig sind, beeinträchtigen sie daher nicht die Anwendung durch eine eventuell auftretende Vergilbung, die durch Nebenreaktionen der Zersetzungsprodukte verursacht werden könnte.

Die erfindungsgemäß hergestellten fluorhaltigen, wäßrigen Polymerdispersionen zeigen bei der Textilausrüstung hervorragende oleophobierende und hydrophobierende Effekte sowohl in bezug auf Wasch- als auch auf chemische Reinigungsbeständigkeit. Sie können entweder allein für die Textilausrüstung eingesetzt werden oder in Kombination mit anderen Ausrüstungsmitteln, wie Vernetzern oder Weichmachern.

Tabelle 1: Herstellungsbeispiele:

| Beisp. Nr. | Fluormonomer | Comonomere | Emulgatoren | Starter | Temp. (°C) | Ausfällung (% der GM) |
|---|---|---|---|---|---|---|
| 1 | 40g HS | 0.75g ABU<br>16g BA | 6g B101<br>2g N230<br>2g X080 | 0.4g AB | 60 | 1.3 |
| 2 | 40g HS | 0.75g ABU<br>14g BA<br>0.96g NHMA | 6g B101<br>2g N230<br>2g X080 | 0.4g AB | 60 | 0.02 |
| 3 | 40g HS | 0.75g ABU<br>14g BA<br>2.0g AA | 6g B101<br>2g N230<br>2g X080 | 0.4g AB | 60 | 0.5 |
| 4 | 40g HS | 0.75g ABU<br>14g BA<br>2.0g AN | 6g B101<br>2g N230<br>2g X080 | 0.4g AB | 60 | 0.3 |
| 5 | 40g HS | 2.0g ABU<br>15g BA | 6g B101<br>2g N230<br>2g X080 | 0.4g AB | 60 | 1.1 |
| 6 | 40g HS | 0.75g ABU<br>14g BA<br>2.0g IBMA | 6g B101<br>2g N230<br>2g X080 | 0.4g AB | 60 | 0.2 |
| 7 | 41.6g HS | 0.63g ABU<br>0.4g LA | 9g B101<br>4g N230 | 0.7g AB | 50 | 1.2 |
| 8 | 40g HS | 0.75g ABU<br>14g BA<br>0.96g NHMA | 12g B101 | 0.4g AB | 60 | 0.1 |
| 9 | 41.6g HS | 0.63g ABU<br>0.96g NHMA<br>0.4g LA | 9g B101 | 0.7g AB | 50 | 0.5 |
| 10 | 40g HS | 14g BA<br>0.75g ABU<br>0.96g NHMA | 10g DMDA | 0.4g AB | 60 | 0.9 |
| 11 | 40g HS | 14g BA<br>0.75g ABU<br>0.96g NHMA | 6g DMDA<br>4g B101 | 0.4g AB | 60 | 0.7 |

EP 0 471 416 B1

Fortsetzung Tabelle 1:

| Beisp. Nr. | Fluormono-mer | Comonomere | Emulga-toren | Starter | Temp. (°C) | Ausfällung (% der GM) |
|---|---|---|---|---|---|---|
| 12 | 40g HS | 14g BA<br>0.75g ABU<br>0.96 NHMA | 6g CS<br>4g B101 | 0.4g AB | 60 | 0.1 |
| 13 | 40g HS | 10g BA<br>0.75g ABU<br>2.88g NHMA | 6g B101<br>2g X080<br>2g N230 | 0.4g AB | 60 | 0.1 |
| 14 | 40g HS | 14g BA<br>0.75g ABU<br>0.96g NHMA | 4g B101<br>6g HN1 | 0.4g AB | 60 | 0.5 |
| 15 | 40g HS | 14g BA<br>0.75 ABU<br>0.96g NHMA | 4g B101<br>6g HN9 | 0.4g AB | 60 | 0.5 |
| 16 | 40g HS | 10g BA<br>0.75g ABU<br>2.88g NHMA | 12g B101 | 0.4g AB | 60 | 5.8 |
| 17 | 40g HS | 8g BA<br>0.75g ABU<br>0.96g NHMA<br>6g P-Cl | 12g B101 | 0.4g AB | 60 | 0.3 |
| 18 | 21.6g HS<br>20g MAE | 0.63g ABU<br>0.96g NHMA<br>0.4g LA | 9g B101 | 0.7g AB | 50 | 0.3 |
| 19 | 40g HS | 16g BA<br>0.75g ABU | 6g KAT1<br>2g N230<br>2g X080 | 0.4g AB | 60 | 1.1 |
| 20 | 40g HS | 16g BA<br>0.75g ABU | 6g KAT2<br>2g N230<br>2g X080 | 0.4g AB | 60 | 5.4 |
| 21 | 40g HS | 16g BA<br>0.75g ABU | 6g KAT3<br>2g N230<br>2g X080 | 0.4g AB | 60 | 1.7 |

5

Fortsetzung Tabelle 1:

| Beisp. Nr. | Fluormono- mer | Comonomere | Emulga- toren | Starter | Temp. (°C) | Ausfällung (% der GM) |
|---|---|---|---|---|---|---|
| 22 | | Komponente 1: 3g einer 50%igen wäßrigen Lösung von mit Methanol hochverethertem Melaminmethylol | | | | |
| | | Komponente 2: 6g einer 25%igen wäßrigen Zinknitratlösung, 1 ml 60 %ige Essigsäure | | | | |
| | | Komponente 3: 6g oder 12g eines handelsüblichen ca. 25%igen Hydrophobiermittels (®NUVA FH) | | | | |

Das Vergleichsbeispiel 22 enthält als Emulgator eine Verbindung der Formel

$C_6F_{13}$-$(CH_2)_2$-O-CONH-$(CH_2)_2$-S-$SO_3$Na.

Gegenüber den erfindungsgemäß zu verwendenden Emulgatoren hat diese Verbindung den Nachteil, daß sie sich erst bei Temperaturen oberhalb von 250°C nahezu vollständig zersetzt. Außerdem kann die fluorhaltige Komponente 3 nur zusammen mit einem Melaminharz und einer Zinknitratlösung eingesetzt werden. Dieser Nachteil entfällt bei den erfindungsgemäß hergestellten Dispersionen.

GM = Gesamtmonomere, HS = Acrylsäure-ethylperfluoralkylester-Gemisch der Zusammensetzung von ca.:

4-6 % $C_6F_{13}CH_2CH_2OCOCH = CH_2$
48-58 % $C_8F_{17}CH_2CH_2OCOCH = CH_2$
8-13 % $C_{10}$-$F_{21}CH_2CH_2OCOCH = CH_2$
2-4 % $C_{12}F_{25}CH_2CH_2OCOCH = CH_2$
0.3-1.2 % $C_{14}F_{29}CH_2CH_2OCOCH = CH_2$

MAE = Methacrylsäure-ethylperfluoralkylester-Gemisch der Zusammensetzung von ca.:

0-1% $C_6F_{13}CH_2CH_2OCOC(CH_3) = CH_2$
0.4-1.4 % $C_8F_{17}CH_2CH_2OCOC(CH_3) = CH_2$
38-42 % $C_{10}F_{21}CH_2CH_2OCOC(CH_3) = CH_2$
31-36 % $C_{12}F_{25}CH_2CH_2OCOC(CH_3) = CH_2$
12-16 % $C_{14}F_{29}CH_2CH_2OCOC(CH_3) = CH_2$
2-6 % $C_{16}F_{33}CH_2CH_2OCOC(CH_3) = CH_2$

BA = Benzylacrylat; ABU = Acroylbutylurethan;
NHMA = N-Hydroxymethylacrylamid;
IBMA = N-Hydroxymethylacrylamidisobutylether;
LA = Laurylacrylat; AA = Acrylamid; AN = Acrylnitril;
P-Cl = para-Chlor-Benzylacrylat;
AB = Azodiisobutyramidindihydrochlorid;
B101 = $C_5F_{11}CHFCH_2CH_2N(CH_3)_2O$;
N230 = Nonylphenol kondensiert mit 23 EO;
X080 = Isotridecylalkohol kondensiert mit 8 EO;
DMDA = N,N-Dimethyldodecylamin-N-oxid;
CS = Cocosalkyldimethylamin-N-oxid;
HNl = $C_{8-10}H_{17-21}N(CH_3)_2O$;
HN9 = $C_{12}H_{25}N(CH_3(C_4H_9)O$;
KAT1 = $C_nF_{2n+1}CH_2CH_2OCOCH_2CH_2N(C_4H_9)_2$xHCl mit n = 4-12;
KAT2 = $C_{6-12}F_{13-25}(C_2H_4O)_{16}H$;
KAT3 = $C_6F_{13}CH_2CH_2SSO_3Na$.

**Anwendungstechnische Prüfungen der fluorhaltigen, wäßrigen Polymerdispersionen und Vergleichsbeispiele:**

Es wurden die erfindungsgemäßen Dispersionen der Beispiele 1, 2 und 18 getestet sowie zum Vergleich die Dispersionen 19 bis 22.

Die Ausrüstungsflotten wurden so angesetzt, daß deren Fluorgehalt konstant war und bei einer vorgegebenen Naßaufnahme nach dem Abquetschen eine definierte Fluorauflage auf den auszurüstenden Geweben möglich ist.

Bei den Prüfergebnissen in Tab. 2 wurde beispielhaft ein Polyamid-Taftgewebe verwendet. Zur Prüfung wurde hierbei jeweils folgendermaßen vorgegangen:

Das zu testende Polyamid-Taftgewebe wird imprägniert, auf einen Rückstand von 50 % abgequetscht, bei 110°C getrocknet und drei Minuten bei 150°C kondensiert. Die Fluorauflage auf den Geweben beträgt somit ca. 0.05 Gew.-% bzw. 0.1 Gew.-%.

Die auf diesem Polyamid-Taftgewebe gemessenen Hydrophob- und Oleophob-Effekte sind in untenstehender Tabelle 2 zusammengefaßt.

Tabelle 2

| Prüfung | Bsp. 18 | | Bsp. 1 | | Bsp. 2 | | Bsp. 19 | | Bsp. 20 | | Bsp. 21 | | Bsp. 22 | |
|---|---|---|---|---|---|---|---|---|---|---|---|---|---|---|
| -Fluorauflage (ppm) | 500 | 1000 | 500 | 1000 | 500 | 1000 | 500 | 1000 | 500 | 1000 | 500 | 1000 | 500 | 1000 |
| **-Wasserabweisung** | | | | | | | | | | | | | | |
| Spray-Test (AATCC 22) | | | | | | | | | | | | | | |
| Anfang | 100 | 100 | 90 | 100 | 100 | 100 | 70 | 100 | 90 | 90 | 70 | 80 | 100 | 100 |
| nach 3 Wäschen bei 60°C | 80 | 100 | 50 | 50 | 70 | 70 | 0 | 0 | 0 | 0 | 0 | 0 | 70 | 80 |
| nach 3 chem. Reinigungen | 100 | 100 | – | – | – | – | – | – | – | – | – | – | 100 | 100 |
| **-Ölabweisung** | | | | | | | | | | | | | | |
| Test nach AATCC 118 | | | | | | | | | | | | | | |
| Anfang | 6 | 6 | 5 | 6 | 6 | 7 | 5 | 6 | 5 | 6 | 2 | 3 | 5 | 6 |
| nach 3 Wäschen bei 60°C | 2 | 4 | 1 | 2 | 4 | 4 | 0 | 1 | 0 | 0 | 0 | 0 | 3 | 4 |
| nach 3 chem. Reinigungen | 6 | 6 | – | – | – | – | – | – | – | – | – | – | 5 | 6 |

**Patentansprüche**

1. Wäßrige, lösungsmittelfreie Dispersionen von Polymerisaten aus Monomeren der Formeln (1) und (2)

$$H_2C=CR-COOC_2H_4-C_nF_{2n+1} \quad (1),$$

wobei R Fluor, Chlor, Wasserstoff oder Methyl und n Zahlen von 5 bis 18, vorzugsweise 8 bis 12,

8

bedeuten

$$H_2C = CRX \quad (2),$$

wobei R Wasserstoff oder Methyl und X eine Gruppe der Formeln $C_6H_5$, $CO_2CH_2C_6H_5$, $CO_2C_2H_4C_6H_5$, CN, $CO_2CH_2C_6H_4Cl$, $CO_2C_6H_4$-$C_1$-$C_4$-alkyl, $CO_2C_nH_{2n+1}$ mit $n = 10$ bis 22, vorzugsweise 14 bis 18, CONHY, wobei Y Wasserstoff, $C_1$-$C_4$-Alkyl, $C_1$-$C_4$-Hydroxyalkyl, $C_1$-$C_4$-Alkoxy-$C_1$-$C_4$-alkyl oder $CO_2$-$C_1$-$C_{20}$-alkyl, vorzugsweise $CO_2$-$C_2$-$C_8$-alkyl, bedeuten, und einem oder mehreren Emulgatoren der Formel (3)

$$C_nF_{2n+1}\text{-}CR^1R^2\text{-}CHR^3\text{-}(CH_2)_x\text{-}NR_2O \quad (3)$$

wobei R $C_1$-$C_4$-Alkyl oder Hydroxyethyl, $R^1$ und $R^2$ gleich oder verschieden sind und $C_1$-$C_4$-Alkyl, Wasserstoff oder Fluor, $R^3$ Wasserstoff oder $C_1$-$C_4$-alkyl, $x = 1$, 2 oder 3 und n Zahlen von 3 bis 9, vorzugsweise 5 bis 7, bedeuten, und/oder der Formel (4)

$$R^1R^2R^3NO \quad (4)$$

wobei $R^1$ und $R^2$ jeweils gleich oder verschieden sein können und $C_1$-$C_4$-Alkyl oder Wasserstoff und $R^3$ $C_8$-$C_{18}$-Alkyl, vorzugsweise $C_{10}$-$C_{14}$-Alkyl, bedeuten.

2. Dispersionen nach Anspruch 1, dadurch gekennzeichnet, daß sie als Emulgatoren nur Verbindungen der Formel (3) enthalten.

3. Dispersionen nach Anspruch 1, enthaltend Verbindungen der Formel (3)

$$C_nF_{2n+1}\text{-}CR^1R^2\text{-}CHR^3\text{-}(CH_2)_x\text{-}NR_2O \quad (3)$$

wobei $R^1$ und $R^3$ Wasserstoff, $R^2$ Fluor, R $C_1$-$C_4$-Alkyl oder $CH_2CH_2OH$, n Zahlen von 3 bis 9 und x Zahlen von 1 bis 3 bedeuten, die in Mischung mit bis zu 30 Gewichtsprozent, bezogen auf die Mischung, einer Verbindung der Formel (3), wobei $R^1$, $R^2$ und $R^3$ Wasserstoff, R $C_1$-$C_4$-Alkyl oder $CH_2CH_2OH$, n Zahlen von 3 bis 9 und x Zahlen von 1 bis 3 bedeuten, vorliegen können, als Emulgatoren.

4. Dispersionen nach Anspruch 1, enthaltend Verbindungen der Formel (3)

$$C_nF_{2n+1}\text{-}CR^1R^2\text{-}CHR^3\text{-}(CH_2)_x\text{-}NR_2O \quad (3)$$

wobei $R^1$ und $R^3$ Wasserstoff, $R^2$ Fluor, R Methyl oder Ethyl, n Zahlen von 5 bis 7 und x die Zahlen 1 oder 2 bedeuten, die in Mischung mit bis zu 30 Gewichtsprozent, bezogen auf die Mischung, einer Verbindung der Formel (3), wobei $R^1$, $R^2$ und $R^3$ Wasserstoff, R Methyl oder Ethyl, n Zahlen von 5 bis 7 und x die Zahlen 1 oder 2 bedeuten, vorliegen können, als Emulgatoren.

5. Dispersionen nach Anspruch 1, dadurch gekennzeichnet, daR bis zu 50 Gewichtsprozent der Emulgatoren der Formeln (3) und/oder (4) durch einen oder mehrere Co-Emulgatoren der Formel (5)

$$C_nH_{2n+1}\text{-}C_6H_4\text{-}O\text{-}(C_2H_4O)_mH \quad (5)$$

wobei n Zahlen Von 4 bis 16, vorzugsweise 8 bis 10, und m Zahlen von 10 bis 30, vorzugsweise 18 bis 26, bedeuten und/oder der Formel (6)

$$C_nH_{2n+1}\text{-}O\text{-}(C_2H_4O)_mH \quad (6),$$

wobei n Zahlen von 10 bis 20, vorzugsweise 13 bis 18, und m Zahlen von 4 bis 12, vorzugsweise 7 bis 9, bedeuten, ersetzt sind.

6. Dispersionen nach Anspruch 1, dadurch gekennzeichnet, daß die Gesamtmenge der Emulgatoren, bezogen auf die Gesamtmenge der Monomeren 5 - 30 Gewichtsprozent, vorzugsweise 10 - 15 Gewichtsprozent, beträgt.

7. Dispersionen nach einem der Ansprüche 1 bis 6, dadurch gekennzeichnet, daß sie einen Fluorgehalt, bezogen auf die gesamte Dispersion, von 10 - 30 Gewichtsprozent haben.

8. Verfahren zur Herstellung der Dispersionen nach Ansprüchen 1 - 4, dadurch gekennzeichnet, daß Monomere der Formeln (1) und (2) in Gegenwart von Emulgatoren der Formeln (3), (4), (5) und/oder (6) in Wasser dispergiert werden.

9. Verwendung der Dispersionen nach einem oder mehreren Ansprüchen 1 bis 7 als Hydro- und Oleophobierungsmittel für Textilien.

**Claims**

1. An aqueous, solvent-free dispersion of a polymer of monomers of the formulae (1) and (2)

$$H_2C = CR\text{-}COOC_2H_4\text{-}C_nF_{2n+1} \qquad (1)$$

where R is fluorine, chlorine, hydrogen or methyl and n is from 5 to 18, preferably from 8 to 12,

$$H_2C = CRX \qquad (2)$$

where R is hydrogen or methyl and X is a group of the formula $C_6H_5$, $CO_2CH_2C_6H_5$, $CO_2C_2H_4C_6H_5$, CN, $CO_2CH_2C_6H_4Cl$, $CO_2C_6H_4\text{-}C_1\text{-}C_4\text{-}alkyl$, $CO_2C_nH_{2n+1}$, where n is from 10 to 22, preferably from 14 to 18, CONHY, where Y is hydrogen, $C_1\text{-}C_4\text{-}alkyl$, $C_1\text{-}C_4\text{-}hydroxyalkyl$, $C_1\text{-}C_4\text{-}alkoxy\text{-}C_1\text{-}C_4\text{-}alkyl$ or $CO_2\text{-}C_1\text{-}C_{20}\text{-}alkyl$, preferably $CO_2\text{-}C_2\text{-}C_8\text{-}alkyl$, and one or more emulsifiers of the formula (3)

$$C_nF_{2n+1}\text{-}CR^1R^2\text{-}CHR^3\text{-}(CH_2)_x\text{-}NR_2O \qquad (3)$$

where R is $C_1\text{-}C_4\text{-}alkyl$ or hydroxyethyl, $R^1$ and $R^2$ are identical or different and each is $C_1\text{-}C_4\text{-}alkyl$, hydrogen or fluorine, $R^3$ is hydrogen or $C_1\text{-}C_4\text{-}alkyl$, x is 1, 2 or 3 and n is from 3 to 9, preferably from 5 to 7, and/or of the formula (4)

$$R^1R^2R^3NO \qquad (4)$$

where $R^1$ and $R^2$ are identical or different and each is $C_1\text{-}C_4\text{-}alkyl$ or hydrogen and $R^3$ is $C_8\text{-}C_{18}\text{-}alkyl$, preferably $C_{10}\text{-}C_{14}\text{-}alkyl$.

2. A dispersion as claimed in claim 1, containing as emulsifier only a compound of the formula (3).

3. A dispersion as claimed in claim 1, containing a compound of the formula (3)

$$C_nF_{2n+1}\text{-}CR^1R^2\text{-}CHR^3\text{-}(CH_2)_x\text{-}NR_2O \qquad (3)$$

where $R^1$ and $R^3$ are each hydrogen, $R^2$ is fluorine, R is $C_1\text{-}C_4\text{-}alkyl$ or $CH_2CH_2OH$, n is from 3 to 9 and x is from 1 to 3, which can be present mixed with up to 30 percent by weight, based on the mixture, of a compound of the formula (3) where $R^1$, $R^2$ and $R^3$ are each hydrogen, R is $C_1\text{-}C_4\text{-}alkyl$ or $CH_2CH_2OH$, n is from 3 to 9 and x is from 1 to 3, as emulsifier.

4. A dispersion as claimed in claim 1, containing a compound of the formula (3)

$$C_nF_{2n+1}\text{-}CR^1R^2\text{-}CHR^3\text{-}(CH_2)_x\text{-}NR_2O \qquad (3)$$

where $R^1$ and $R^3$ are each hydrogen, $R^2$ is fluorine, R is methyl or ethyl, n is from 5 to 7 and x is 1 or 2, which can be present mixed with up to 30 percent by weight, based on the mixture, of a compound of the formula (3) where $R^1$, $R^2$ and $R^3$ are each hydrogen, R is methyl or ethyl, n is from 5 to 7 and x is 1 or 2, as emulsifier.

5. A dispersion as claimed in claim 1, wherein up to 50 percent by weight of the emulsifiers of the formulae (3) and/or (4) are replaced by one or more co-emulsifiers of the formula (5)

$$C_nH_{2n+1}-C_6H_4-O-(C_2H_4O)_mH \qquad (5)$$

where n is from 4 to 16, preferably from 8 to 10, and m is from 10 to 30, preferably from 18 to 26, and/or of the formula (6)

$$C_nH_{2n+1}-O-(C_2H_4O)_mH \qquad (6)$$

where n is from 10 to 20, preferably from 13 to 18, and m is from 4 to 12, preferably from 7 to 9.

6. A dispersion as claimed in claim 1, wherein the total amount of emulsifier, based on the total amount of monomer, is 5 - 30 percent by weight, preferably 10 - 15 percent by weight.

7. A dispersion according to any one of claims 1 to 6, having a fluorine content, based on the total dispersion, of 10 - 30 percent by weight.

8. A process for producing a dispersion as claimed in claims 1 - 4, which comprises dispersing monomers of the formulae (1) and (2) in the presence of emulsifiers of the formulae (3), (4), (5) and/or (6) in water.

9. The use of a dispersion as claimed in one or more of claims 1 to 7 as a water and oil repellent for textiles.

**Revendications**

1. Dispersions aqueuses exemptes de solvants de polymères à partir de monomères de formules (1) et (2)

$$H_2C = CR-COOC_2H_4-C_nF_{2n+1} \qquad (1)$$

où R représente le fluor, le chlore, l'hydrogène ou le méthyle et n va de 5 à 18, de préférence de 8 à 12,

$$H_2C = CRX \qquad (2)$$

R représentant l'hydrogène ou le méthyle et X un groupe de formules $C_6H_5$, $CO_2CH_2C_6H_5$, $CO_2C_2H_4C_6H_5$, CN, $CO_2CH_2C_6H_4Cl$, $CO_2C_6H_4$-(alkyle en $C_1$-$C_4$), $CO_2C_nH_{2n+1}$ avec n = de 10 à 22, de préférence de 14 à 18, CONHY, Y représentant l'hydrogène, les alkyle en $C_1$-$C_4$, hydroxyalkyle en $C_1$-$C_4$, alcoxy en $C_1$-$C_4$-alkyle en $C_1$-$C_4$ ou $CO_2$-alkyle en $C_1$-$C_{20}$, de préférence $CO_2$-alkyle en $C_2$-$C_8$, et d'un ou de plusieurs émulsifiants de formule (3)

$$C_nF_{2n+1}-CR^1R^2-CHR^3-(CH_2)_x-NR_2O \qquad (3)$$

où R représente un alkyle en $C_1$-$C_4$ ou l'hydroxyéthyle, $R^1$ et $R^2$ sont identiques ou différents et représentent un alkyle en $C_1$-$C_4$, l'hydrogène ou le fluor, $R^3$ représente l'hydrogène ou un alkyle en $C_1$-$C_4$, x vaut 1, 2 ou 3 et n va de 3 à 9, de préférence de 5 à 7, et/ou de formule (4)

$$R^1R^2R^3NO \qquad (4)$$

$R^1$ et $R^2$ pouvant être chacun identiques ou différents et représenter un alkyle en $C_1$-$C_4$ ou l'hydrogène et $R^3$ représente un alkyle en $C_8$-$C_{18}$, de préférence un alkyle en $C_{10}$-$C_{14}$.

2. Dispersions selon la revendication 1, caractérisées en ce qu'elles contiennent en tant qu'émulsifiants seulement des composés de formule (3).

3. Dispersions selon la revendication 1, contenant des composés de formule (3)

$C_nF_{2n+1}$-$CR^1R^2$-$CHR^3$-$(CH_2)_x$-$NR_2O$    (3)

où $R^1$ et $R^3$ représentent l'hydrogène, $R^2$ représente le fluor, R un alkyle en $C_1$-$C_4$ ou $CH_2CH_2OH$, n va de 3 à 9 et x va de 1 à 3, qui peuvent être présents en mélange avec jusqu'à 30 % en poids par rapport au mélange d'un composé de formule (3), où $R^1$, $R^2$ et $R^3$ représentent l'hydrogène, R un alkyle en $C_1$-$C_4$ ou $CH_2CH_2OH$, n va de 3 à 9 et x va de 1 à 3, en tant qu'émulsifiants.

4.  Dispersions selon la revendication 1, contenant des composés de formule (3)

$C_nF_{2n+1}$-$CR^1R^2$-$CHR^3$-$(CH_2)_x$-$NR_2O$    (3)

où $R^1$ et $R^3$ représentent l'hydrogène, $R^2$ représente le fluor, A représente le méthyle ou l'éthyle, n va de 5 à 7 et x vaut 1 ou 2, qui peuvent être présents en mélange jusqu'à 30 % en poids par rapport au mélange, d'un composé de formule (3) où $R^1$, $R^2$ et $R^3$ représentent l'hydrogène, R représente le méthyle ou l'éthyle, n vaut de 5 à 7 et x vaut 1 ou 2, en tant qu'émulsifiants.

5.  Dispersions selon la revendication 1, caractérisées en ce que, jusqu'à 50 % en poids des émulsifiants de formules (3) et/ou (4), sont remplacés par un ou plusieurs co-émulsifiants de formule (5)

$C_nH_{2n+1}$-$C_6H_4$-O-$(C_2H_4O)_mH$    (5)

où n va de 4 à 16, de préférence de 8 à 10, et m va de 10 à 30, de préférence de 18 à 26, et/ou de formule (6)

$C_nH_{2n+1}$-O-$(C_2H_4O)_mH$    (6)

où n représente les nombres de 10 à 20, de préférence de 13 à 18 et m représente les nombres de 4 à 12, de préférence de 7 à 9.

6.  Dispersions selon la revendication 1, caractérisées en ce que la quantité totale d'émulsifiants par rapport à la quantité totale ces monomères est de 5 à 30 % en poids, de préférence de 10 à 15 % en poids.

7.  Dispersions selon l'une des revendications 1 à 6, caractérisées en ce qu'elles ont une teneur en fluor, par rapport à la totalité de la dispersion, de 10 à 30 % en poids.

8.  Procédé pour la préparation des dispersions selon les revendications 1 à 4, caractérisé en ce que les monomères de formules (1) et (2) sont dispersés en présence d'émulsifiants de formules (3), (4), (5) et/ou (6) dans l'eau.

9.  Utilisation des dispersions selon une ou plusieurs des revendications 1 à 7 en tant qu'agents hydrofugeants et oléofugeants pour des matériaux textiles.